(19) Europäisches Patentamt

European Patent Office

Office européen des brevets

(11) Veröffentlichungsnummer: **0 374 671 B1**

(12) **EUROPÄISCHE PATENTSCHRIFT**

(45) Veröffentlichungstag der Patentschrift: **30.03.94**

(21) Anmeldenummer: **89122819.9**

(22) Anmeldetag: **11.12.89**

Verbunden mit 90900103.4/0448579
(europäische
Anmeldenummer/Veröffentlichungsnummer)
durch Entscheidung vom 05.03.92.

(51) Int. Cl.5: **C09K 7/06**

(54) **Verwendung ausgewählter Esteröle in Bohrspülungen insbesondere zur off-shore-Erschliessung von Erdöl- bzw. Erdgasvorkommen (I).**

(30) Priorität: **19.12.88 DE 3842659**

(43) Veröffentlichungstag der Anmeldung:
**27.06.90 Patentblatt 90/26**

(45) Bekanntmachung des Hinweises auf die
Patenterteilung:
**30.03.94 Patentblatt 94/13**

(84) Benannte Vertragsstaaten:
**AT BE CH DE ES FR GB GR IT LI LU NL SE**

(56) Entgegenhaltungen:
**EP-A- 0 009 746**
**US-A- 4 374 737**
**US-A- 4 631 136**

(73) Patentinhaber: **Henkel Kommanditgesellschaft auf Aktien**

**D-40191 Düsseldorf(DE)**

Patentinhaber: **Baroid Drilling Fluids, Inc.**
**3000 North Sam Houston Parkway East**
**Houston, Texas(US)**

(72) Erfinder: **Müller, Heinz**
**Goldregenweg 4**
**D-4019 Monheim(DE)**
Erfinder: **Herold, Claus-Peter, Dr.**
**Ostpreussenstrasse 26**
**D-4020 Mettmann(DE)**
Erfinder: **von Tapavicza, Stephan, Dr.**
**Thomas-Mann-Strasse 12**
**D-4006 Erkrath 2(DE)**
Erfinder: **Grimes, Douglas John**
**12 Ledborough Lane**
**Beaconsfield HP9 2PZ(GB)**
Erfinder: **Braun, Jean-Marc**
**Bernstorffstrasse 34 E**
**D-3100 Celle(DE)**
Erfinder: **Smith, Stuart P. T.**
**Creag Ghlaf Drumoak**
**Banchory Kincardineshire(GB)**

(74) Vertreter: **von Kreisler, Alek, Dipl.-Chem.**
**Patentanwälte**
**von Kreisler-Selting-Werner**
**Postfach 10 22 41**
**D-50462 Köln (DE)**

EP 0 374 671 B1

EP 0 374 671 B1

## Beschreibung

Die Erfindung beschreibt neue Bohrspülflüssigkeiten auf Basis von Esterölen und darauf aufgebaute Invert-Bohrspülschlämme, die sich durch hohe ökologische Verträglichkeit bei gleichzeitig guten Stand- und Gebrauchseigenschaften auszeichnen. Ein wichtiges Einsatzgebiet für die neuen Bohrspülsysteme sind off-shore-Bohrungen zur Erschließung von Erdöl- und/oder Erdgasvorkommen, wobei es hier die Erfindung insbesondere darauf abstellt, technisch brauchbare Bohrspülungen mit hoher ökologischer Verträglichkeit zur Verfügung zu stellen. Der Einsatz der neuen Bohrspülsysteme hat besondere Bedeutung im marinen Bereich, ist aber nicht darauf eingeschränkt. Die neuen Spülsysteme können ganz allgemeine Verwendung auch bei landgestützten Bohrungen finden, beispielsweise beim Geothermiebohren, beim Wasserbohren, bei der Durchführung geowissenschaftlicher Bohrungen und bei Bohrungen im Bergbaubereich. Grundsätzlich gilt auch hier, daß durch die erfindungsgemäß ausgewählten Bohrölflüssigkeiten auf Esterbasis der ökotoxische Problembereich substantiell vereinfacht wird.

Flüssige Spülsysteme zur Niederbringung von Gesteinsbohrungen unter Aufbringen des abgelösten Bohrkleins sind bekanntlich beschränkt eingedickte fließfähige Systeme auf Wasserbasis oder auf Ölbasis. Diese zuletzt genannten Systeme auf Ölbasis finden in der Praxis zunehmende Bedeutung und hier insbesondere im Bereich der off-shore-Bohrungen oder beim Durchteufen wasserempfindlicher Schichten.

Bohrspülungen auf Ölbasis werden im allgemeinen als sogenannte Invert-Emulsionsschlämme eingesetzt, die aus einem Dreiphasensystem bestehen: Öl, Wasser und feinteilige Feststoffe. Es handelt sich dabei um Zubereitungen vom Typ der W/O-Emulsionen, d. h. die wäßrige Phase ist heterogen fein-dispers in der geschlossenen Ölphase verteilt. Zur Stabilisierung des Gesamtsystems und zur Einstellung der gewünschten Gebrauchseigenschaften ist eine Mehrzahl von Zusatzstoffen vorgesehen, insbesondere Emulgatoren bzw. Emulgatorsysteme, Beschwerungsmittel, fluid-loss-Additive, Alkalireserven, Viskositätsregler und dergleichen. Zu Einzelheiten wird beispielsweise verwiesen auf die Veröffentlichung P. A. Boyd et al. "New Base Oil Used in Low-Toxicity Oil Muds" Journal of Petroleum Technology, 1985, 137 bis 142 sowie R. B. Bennett "New Drilling Fluid Technology - Mineral Oil Mud" Journal of Petroleum Technology, 1984, 975 bis 981 sowie die darin zitierte Literatur.

Öl-basierte Bohrspülungen waren zunächst aufgebaut auf Dieselölfraktionen mit einem Gehalt an Aromaten. Zur Entgiftung und Verminderung der damit geschaffenen ökologischen Problematik ist dann vorgeschlagen worden, weitgehend aromatenfreie Kohlenwasserstofffraktionen - heute auch als "nonpolluting oils" bezeichnet - als geschlossene Ölphase einzusetzen - siehe hierzu die zuvor zitierte Literatur. Wenn auf diese Weise auch durch den Ausschluß der aromatischen Verbindungen gewisse Fortschritte erreicht worden sind, so erscheint eine weitere Minderung der Umweltproblematik - ausgelöst durch Bohrspülflüssigkeiten der hier betroffenen Art - dringend erforderlich. Gültigkeit hat das insbesondere beim Niederbringen von off-shore-Bohrungen zur Erschließung von Erdöl- bzw. Erdgasvorkommen, weil das marine Ökosystem besonders empfindlich auf das Einbringen von toxischen und schwer abbaubaren Substanzen reagiert.

Die einschlägige Technologie hat seit einiger Zeit die Bedeutung von Ölphasen auf Esterbasis zur Lösung dieser Problematik erkannt. So beschreiben die US-Patentschriften 4,374,737 und 4,481,121 ölbasierte Bohrspülflüssigkeiten, in denen nonpolluting oils Verwendung finden sollen. Als nonpolluting oils werden nebeneinander und gleichwertig aromatenfreie Mineralölfraktionen und Pflanzenöle von der Art Erdnußöl, Sojabohnenöl, Leinsamenöl, Maisöl, Reisöl oder auch Öle tierischen Ursprungs wie Walöl genannt. Durchweg handelt es sich bei den hier genannten Esterölen pflanzlichen und tierischen Ursprungs um Triglyceride natürlicher Fettsäuren, die bekanntlich eine hohe Umweltverträglichkeit besitzen und gegenüber Kohlenwasserstofffraktionen - auch denn diese aromatenfrei sind - aus ökologischen Überlegungen deutliche Überlegenheit besitzen.

Interessanterweise schildert dann aber kein Beispiel der genannten US-Patentschriften die Verwendung solcher natürlicher Esteröle in Invert-Bohrspülungen der hier betroffenen Art. Durchweg werden Mineralölfraktionen als geschlossene Ölphase eingesetzt.

Auch die Lehre der US-PS 4 631 136 will ölbasierte Bohrspülungen erhöhter ökologischer Verträglichkeit auf Triglyceridbasis pflanzlichen Ursprungs zur Verfügung stellen. Vorgeschlagen wird hier, vorzugsweise solche Glyceridöle einzusetzen, die einen Mindestgehalt an Resten 2-fach und 3-fach ethylenisch ungesättigter Carbonsäuren aufweisen. Zusätzlich wird die Anweisung gegeben, in den Esterölen bekannte Antioxidantien und zugehörige Synergisten zur Wirkungssteigerung der Antioxidantien mitzuverwenden. Durch diese Maßnahmen soll eine Verdickung des Systems aufgrund oxidativ ausgelöster Polymerisations-bzw. Vernetzungsreaktionen verhindert werden.

Die der Erfindung zugrunde liegenden Untersuchungen haben gezeigt, daß der im Stand der Technik erwogene Einsatz von leicht abbaubaren Ölen pflanzlichen und/oder tierischen Ursprungs aus praktischen Gründen nicht in Betracht kommen kann. Die rheologischen Eigenschaften solcher Ölphasen sind für den breiten in der Praxis geforderten Temperaturbereich von 0 bis 5 °C einerseits bis zu 250 °C und darüber andererseits nicht in den Griff zu bekommen.

Die Lehre der US-PS 4,481,121 erwähnt in ihrem allgemeinen Beschreibungsteil als brauchbare Ölphase neben den Triglyceriden auch ein Handelsprodukt "Arizona 208" der Fa. Arizona Chemical Company, Wayne, N.J., bei dem es sich um einen gereinigten Isooctyl-Monoalkohol-Ester hochreiner Tallölfettsäuren handelt. Ein hier erstmalig genannter Ester aus einem monofunktionellen Alkohol und monofunktionellen Carbonsäuren wird als gleichwertig mit Triglyceriden natürlichen Ursprungs und/oder aromatenfreien Kohlenwasserstofffraktionen dargestellt.

Irgendwelche nacharbeitbaren Beispiele zum Einsatz eines solchen Esters aus monofunktionellen Komponenten finden sich in der genannten US-Patentschrift nicht.

Die Lehre der nachfolgend geschilderten Erfindung geht von der Erkenntnis aus, daß es tatsächlich möglich ist, ölbasische Invert-Spülungen der hier betroffenen Art auf Basis von Esterölen hoher Umweltverträglichkeit herzustellen, die in ihrem Lager und Einsatzverhalten den besten bisher bekannten ölbasierten Invert-Spülsystemen entsprechen, gleichwohl aber den zusätzlichen Vorteil der erhöhten Umweltverträglichkeit besitzen. Zwei wesentliche Erkenntnisse beherrschen dabei die erfindungsgemäße Lehre:

Für den Aufbau von mineralölfreien ölbasischen Invert-Spülungen sind die in Form natürlicher Öle anfallenden Triglyceride nicht geeignet, brauchbar sind jedoch die sich aus diesen Ölen bzw. Fetten ableitenden Ester der monofunktionellen Carbonsäuren mit monofunktionellen Alkoholen. Die zweite wesentliche Erkenntnis ist, daß sich Esteröle der hier betroffenen Art im Einsatz tatsächlich nicht gleich verhalten wie die bisher verwendeten Mineralölfraktionen auf reiner Kohlenwasserstoffbasis. Die hier betroffenen Esteröle aus monofunktionellen Komponenten unterliegen im praktischen Einsatz einer partiellen Hydrolyse. Hierdurch werden freie Fettsäuren gebildet. Diese wiederum reagieren mit den in Bohrspülsystemen der hier betroffenen Art stets vorliegenden alkalischen Bestandteilen - z. B. mit der zum Korrosionsschutz eingesetzten Alkalireserve - zu den entsprechenden Salzen. Salze aus stark hydrophilen Basen und den in Fetten bzw. Ölen natürlichen Ursprungs häufig anzutreffenden Säuren des Bereichs von etwa C 16 bis 24 sind aber bekanntlich Verbindungen mit vergleichsweise hohen HLB-Werten, die insbesondere zur Einstellung und Stabilisierung von O/W-Emulsionen führen. Die Wasch- und Reinigungstechnik macht hiervon bekanntlich in größtem Umfange Gebrauch. Die Bildung unerwünscht großer Mengen solcher O/W-Emulgatorsysteme muß aber mit den im Sinne der erfindungsgemäßen Zielsetzung geforderten W/O-Emulsionen interferieren und damit zu Störungen führen. Die im nachfolgenden geschilderte Lehre der Erfindung beschreibt, wie trotz dieser systemimmanenten Schwierigkeiten in der Praxis verwertbare Invert-Bohrspülungen auf Basis von Esterölen Verwendung finden können.

Gegenstand der Erfindung ist dementsprechend in einer ersten Ausführungsform die Verwendung ausgewählter, im Temperaturbereich von 0 bis 5 °C fließ- und pumpfähiger Ester aus monofunktionellen Alkoholen mit 2 bis 12 C-Atomen und olefinisch ein- und/oder mehrfach ungesättigten Monocarbonsäuren mit 16 bis 24 C-Atomen als Ölphase oder wenigstens überwiegender Anteil der Ölphase von Invert-Bohrspülschlämmen, die in einer geschlossenen Ölphase eine disperse wäßrige Phase sowie Emulgatoren, Beschwerungsmittel, fluid-loss-Additive, Viskositätsbildner und gewunschtenfalls weitere übliche Zusatzstoffe zusammen mit einer Alkalireserve mit der Maßgabe enthalten, daß auf die Mitverwendung starker hydrophiler Basen wie Alkalihydroxid und/oder Diethanolamin verzichtet wird. Als Alkalireserve, insbesondere zum Schutz gegen Einbrüche von $CO_2$ und/oder $H_2S$ in die Bohrspülung und damit zum Schutz vor Korrosion, wird häufig der Zusatz von Kalk (Calciumhydroxid bzw. lime) vorgesehen. Die Verwendung eines solchen Kalkzusatzes als Alkalireserve ist im Rahmen der Erfindung möglich. Allerdings wird hier darauf geachtet nur vergleichsweise beschränkte Mengen dieser alkalischen Komponente einzumischen. Der Höchstbetrag für den Kalkzusatz liegt in der erfindungsgemäß bevorzugten Ausführungsform bei etwa 2 lb/bbl (Kalk/Ölspülung) und damit deutlich unter den Werten, die in der Praxis üblicherweise in ölbasischen Invert-Spülungen zur Anwendung kommen.

Die Erfindung betrifft in einer weiteren Ausführungsform mineralölfreie Invert-Bohrspülungen, die für die off-shore-Erschließung von Erdöl- bzw. Erdgasvorkommen geeignet sind und in einer geschlossenen Ölphase auf Basis von Esterölen eine disperse wäßrige Phase zusammen mit Emulgatoren, Verdickern, Beschwerungsmitteln, fluid-loss-Additiven und gewünschtenfalls weiteren üblichen Zusatzstoffen enthalten. Die neuen Bohrspülsysteme sind dadurch gekennzeichnet, daß die Ölphase zum wenigstens überwiegenden Anteil aus Estern monofunktioneller Alkohole mit 2 bis 12 C-Atomen und olefinisch 1- und/oder mehrfach ungesättigten Monocarbonsäuren mit 16 bis 24 C-Atomen gebildet ist, daß weiterhin die W/O-Emulsion schwach alkalisch konditioniert ist und bei Kalkzusatz diese Alkalireserve Mengen von etwa 2 lb/bbl (Kalk/ Ölspülung) nicht überschreitet. Es kann bevorzugt sein, daß der Kalkgehalt leicht unter diesem Grenzwert liegt.

Im nachfolgenden wird zunächst auf die erfindungsgemäß ausgewählten Esteröle eingegangen, die bestimmungsgemäß ausschließlich oder wenigstens als substantieller Anteil die geschlossene Ölphase der Invert-Bohrschlämme bilden.

Wie bereits angegeben liegt ein entscheidungswesentliches Kriterium in der Auswahl von Estern, die der Klasse der Umsetzungsprodukte aus monofunktionellen Carbonsäuren mit monofunktionellen Alkoholen zuzuordnen ist. Die Erfindung sieht darüber hinaus aber vor, innerhalb dieser Klasse Carbonsäuren des vorgegebenen Bereichs von 16 bis 24 C-Atomen ausschließlich oder wenigstens überwiegend einzusetzen. Die Carbonsäuren können sich dabei von unverzweigten oder verzweigten Kohlenwasserstoffketten ableiten, wobei den geradkettigen besondere Bedeutung zukommt. Monocarbonsäuren dieser Art und des hier betroffenen Bereichs von 16 bis 24 C-Atomen bzw. deren Ester sind als überwiegend gesättigte Kohlenwasserstoffverbindungen aufgrund ihrer vergleichsweise hohen Erstarrungswerte ungeeignet. Ester der hier betroffenen Art sind allerdings selbst dann bis herunter zu Temperaturen im Bereich von 0 bis 5 °C fließ- und pumpfähig, wenn ein hinreichender Grad von olefinisch ungesättigten Esterbestandteilen sichergestellt ist. In der bevorzugten Ausführungsform der Erfindung werden dementsprechend Ester der hier beschriebenen Art verwendet, die sich zu mehr als 70 Gew. -% und vorzugsweise zu mehr als 80 Gew.-% von olefinisch ungesättigten Carbonsäuren des Bereichs von $C_{16-24}$ ableiten. Wichtige natürliche Ausgangsmaterialien liefern Carbonsäuregemische, die zu wenigstens 90 Gew.-% olefinisch ungesättigte Carbonsäuren des hier genannten C-Bereiches enthalten. Die ungesättigten Carbonsäuren können dabei einfach und/oder mehrfach olefinisch ungesättigt sein. Beim Einsatz von Carbonsäuren bzw. Carbonsäuregemischen natürlichen Ursprungs spielt neben einer einfachen ethylenischen Doppelbindung im Molekül insbesondere die zweifache und in untergeordnetem Maße auch noch eine dreifache ethylenische Doppelbindung je Carbonsäuremolekül eine gewisse Rolle. Einzelheiten hierzu werden im nachfolgenden noch gegeben.

Die Auswahl eines so vergleichsweise hoch ungesättigten Carbonsäureanteils in den Esterölen stellt - in Verbindung mit der erfindungsgemäßen Auswahl von Estern aus monofunktionellen Reaktanten - sicher, daß die Esteröle und letztlich damit die fertigen Invert-Emulsionen die von der Praxis geforderten rheologischen Eigenschaften insbesondere auch bei niederen Temperaturen erfüllen. Die erfindungsgemäß eingesetzten vergleichsweise stark ungesättigten Esteröle des C-Zahlbereichs von 16 bis 24 im Monocarbonsäureanteil besitzen in der bevorzugten Ausführungsform Erstarrungswerte (Fließpunkt und Stockpunkt) unterhalb - 10 °C und insbesondere unterhalb - 15 °C. Trotz dieser hohen Beweglichkeit bei tiefen Temperaturen ist durch die erfindungsgemäß vorgeschriebene Molekülgröße des Esteröls sichergestellt, daß die Flammpunkte der Esteröle hinreichend hohe Werte haben. Sie liegen bei mindestens 80 °C, überschreiten jedoch im allgemeinen die Temperaturgrenze von etwa 100 °C. Bevorzugt werden Esteröie, die Flammpunkte oberhalb 160 °C besitzen, wobei ohne Schwierigkeiten auch bei tiefen Temperaturen leicht bewegliche Esteröle der geschilderten Art hergestellt werden können, deren Flammpunkte bei 185 °C oder höher liegen.

In Verbindung mit diesen durch die Molekülgröße bestimmten hohen Flammpunkten kann gleichzeitig sichergestellt werden, daß die Viskositätswerte geforderte übliche Grenzwerte erfüllen. So liegt bei bevorzugten Esterölen der geschilderten Art die Brookfield(RVT)-Viskosität im Temperaturbereich von 0 bis 5 °C bei Werten nicht über 55 mPas und vorzugsweise bei Werten von höchstens 45 mPas oder darunter. Es ist möglich, Werte im Bereich von 30 und auch noch tiefer, beispielsweise im Bereich von 20 bis 25 mPas im angegebenen Temperaturbereich einzustellen.

Im Rahmen der erfindungsgemäß einzusetzenden ungesättigten Esteröle lassen sich zwei Unterklassen von besonderer Bedeutung formulieren.

Die erste dieser Unterklassen geht von ungesättigten $C_{16-24}$-Monocarbonsäuren aus, die zu nicht mehr als etwa 35 Gew.-% 2-und gegebenenfalls mehrfach olefinisch ungesättigt sind. Hier ist also der Gehalt an mehrfach ungesättigten Carbonsäureresten im Esteröl vergleichsweise beschränkt. Bevorzugt ist im Rahmen dieser Unterklasse dann allerdings, daß die Carbonsäurereste zu wenigstens etwa 60 Gew.-% einfach olefinisch ungesättigt sind.

In Abweichung von der zuvor geschilderten ersten Unterklasse leitet sich die zweite für die Praxis bedeutende Unterklasse von Esterölen aus solchen $C_{16-24}$-Monocarbonsäuregemischen ab, die sich zu mehr als 45 Gew.-% und dabei vorzugsweise zu mehr als 55 Gew.-% von 2- und/oder mehrfach olefinisch ungesättigten Säuren des genannten C-Zahlbereiches ableiten.

Die wichtigsten ethylenisch einfach ungesättigten Carbonsäuren des hier betroffenen Bereichs sind die Hexadecensäure (Palmitoleinsäure, $C_{16}$), die Ölsäure ($C_{18}$), die ihr verwandte Rizinolsäure ($C_{18}$) und die Erucasäure ($C_{22}$). Die wichtigste zweifach ungesättigte Carbonsäure des hier betroffenen Bereichs ist die Linolsäure ($C_{18}$) und die wichtigste dreifach ethylenisch ungesättigte Carbonsäure die Linolensäure ($C_{18}$).

Als Esteröl können im erfindungsgemäßen Sinne ausgewählte Individuen des Ester-Typs ungesättigte Monocarbonsäure/Monoalkohol eingesetzt werden. Ein Beispiel hierfür sind die Ester der Ölsäure, etwa von

4

der Art des Ölsäureisobutylesters. Für die Rheologie des Systems und/oder aus Gründen der Zugänglichkeit ist es häufig wünschenswert, Säuregemische einzusetzen. Hier liegt Bedeutungsvolles für die Erfüllung der zuvor gegebenen Spezifikationen der beiden Unterklassen für bevorzugte Esteröle.

Die erste dieser beiden Unterklassen zeichnet sich wie angegeben dadurch aus, daß ihr Gehalt an 2- und mehrfach ungesättigten Säuren beschränkt ist und etwa 35 % nicht übersteigt. Pflanzenöle natürlichen Ursprungs, die bei ihrer Verseifung bzw. Umesterung Gemische von Carbonsäuren bzw. Carbonsäureester der hier geforderten Art liefern, sind beispielsweise Palmöl, Erdnußöl, Rizinusöl und insbesondere Rüböl. In Betracht kommen dabei sowohl Rübölsorten mit hohem Gehalt an Erucasäure als auch die moderneren Rübölzüchtungen mit verringertem Gehalt an Erucasäure und dafür erhöhtem Ölsäuregehalt.

Esterölen auf Basis dieser Definition zur ersten Unterklasse kann schon deswegen besondere Bedeutung zukommen, weil hier möglicherweise auftretende Probleme aus der Oxidationsinstabilität im praktischen Betrieb gemildert sind. Im praktischen Arbeiten wird ja die Bohrspülung kontinuierlich im Kreislauf gepumpt und dabei ständig - häufig mit großer Oberfläche und bei wenigstens leicht erhöhten Temperaturen - mit Luftsauerstoff in Kontakt gebracht, um das hochgetragene Bohrklein beispielsweise durch Absieben auszusondern.

Aber auch Carbonsäuregemische der zuvor genannten zweiten Unterklasse haben für den Einsatz im erfindungsgemäßen Sinne beträchtliche praktische Bedeutung. Nicht zuletzt Anlaß hierfür ist ihre breite Zugänglichkeit im Rahmen natürlicher Fettstoffe pflanzlichen und/oder tierischen Ursprungs. Klassische Beispiele für Öle mit hohem Gehalt an Carbonsäuren des Bereichs von $C_{16-18}$ bzw. $C_{16-22}$ und gleichzeitig wenigstens etwa 45 % an wenigstens zweifach ethylenisch ungesättigten Carbonsäuren sind das Baumwollsaatöl, das Sojaöl, das Sonnenblumenöl und das Leinöl. Auch die bei der Zellstoffgewinnung isolierten Tallölsäuren fallen in diesen Bereich. Einsatzmaterialien dieses zuletzt genannten Ursprungs zeichnen sich allerdings in der Regel durch mehr oder weniger große zusätzliche Gehalte an Harzbestandteilen aus. Ein typisches tierisches Einsatzmaterial für die Gewinnung entsprechender Carbonsäuregemische ist Fischöl, insbesondere das Heringsöl.

Wie bereits ausgeführt, können die erfindungsgemäß eingesetzten Esteröle ausgewählte individuell bestimmte Ester der angegebenen Definition sein. Üblicherweise werden allerdings Gemische von Estern aus entsprechenden Monocarbonsäuren und Monoalkoholen vorliegen. Dabei fallen in den Rahmen der Erfindung insbesondere solche Gemische, die einerseits der erfindungsgemäß geforderten Viskositätsbedingung, besonders auch gerade bei niederen Temperaturen entsprechen und andererseits zu wenigstens 50 bis 51 % die monofunktionellen Ester der olefinisch ein- und/oder mehrfach ungesättigten Carbonsäuren mit 16 bis 24 C-Atomen aufweisen. Esterbestandteile und insbesondere wiederum Carbonsäureester monofunktioneller Alkohole und monofunktioneller Carbonsäuren anderer Konstitution sind als untergeordnete Mischungsbestandteile zulässig, sofern das Anforderungsprofil an die Eigenschaften des Stoffgemisches erfüllt ist. Wichtig ist das für den Einsatz von Carbonsäuregemischen natürlichen Ursprungs. In aller Regel enthalten solche natürlichen Einsatzmaterialien auch mehr oder weniger große Anteile von gesättigten Carbonsäuren und dabei häufig auch gerade Carbonsäuren des Bereichs $C_{16-18}$. Gesättigte Fettsäuren dieser Art bzw. ihre Ester bereiten wegen der vergleichsweise hochliegenden Schmelzpunkte leicht rheologische Schwierigkeiten. Erfindungsgemäß kann es dementsprechend bevorzugt sein, daß in den Esterölen gesättigte Carbonsäurereste des Bereichs $C_{16/18}$ nicht mehr als etwa 20 Gew.-% und insbesondere nicht mehr als etwa 10 Gew.-% ausmachen.

Unbedenklicher ist dagegen das Vorliegen insbesondere gesättigter Carbonsäurereste des C-Zahlbereichs unterhalb von $C_{16}$, insbesondere im Bereich von $C_{12/14}$. Die hier in der Praxis der natürlichen Einsatzmaterialien häufig vorliegenden Gehalte solcher niederen voll gesättigten Fettsäuren sind in untergeordneten Mengen häufig wertvolle Mischungskomponenten im Sinne der erfindungsgemäßen Zielsetzung. Ihre Ester sind unter den praktischen Einsatzbedingungen nicht oxidationsanfällig, ihre rheologischen Eigenschaften begünstigen die erfindungsgemäße Zielsetzung, die bisher in der Praxis allein verwendeten reinen Kohlenwasserstofföle durch Esteröle bzw. Esterölfraktionen zu ersetzen.

Die Alkoholreste der Ester bzw. Estergemische im Sinne der erfindungsgemäßen Lehre leiten sich bevorzugt von geradkettigen und/oder verzweigtkettigen gesättigten Alkoholen ab, wobei besondere Bedeutung Alkoholen mit wenigstens 4 C-Atomen und insbesondere Alkoholen des Bereichs bis etwa $C_{10}$ zukommt. Die Alkohole können dabei ebenfalls natürlichen Ursprungs sein und sind dann üblicherweise aus den entsprechenden Carbonsäuren bzw. ihren Estern durch hydrierende Reduktion gewonnen worden. Die Erfindung ist aber keineswegs auf Einsatzmaterialien natürlichen Ursprungs eingeschränkt. Sowohl auf der Seite der Monoalkohole wie auf der Seite der Monocarbonsäuren können statt der Einsatzmaterialien natürlichen Ursprungs anteilsweise oder vollständig entsprechende Komponenten synthetischen Ursprungs verwendet werden. Typische Beispiele für Alkohole sind die entsprechenden Oxoalkohole (verzweigte Alkohole) bzw. die nach dem Ziegler-Verfahren gewonnenen linearen Alkohole. Ebenso können insbeson-

5

re in Carbonsäuregemischen vorliegende Monocarbonsäurekomponentenaus der petrochemischen Synthese abgeleitet sein. Vorteilhaftes liegt allerdings in den Einsatzmaterialien natürlichen Ursprungs insbesondere in den nachgewiesenen niederen toxikologischen Werten, der leichten Abbaubarkeit und der leichten Zugänglichkeit. Für die letztlich gewünschte Vernichtung der gebrauchten Ölspülung auf natürlichem Wege ist es von Bedeutung, daß sich Esteröle der hier beschriebenen Art sowohl auf aerobem wie auf anaerobem Weg abbauen lassen.

Eine wichtige Einschränkung ist allerdings mit der Verwendung dieser Esteröle in Invert-Ölschlämmen der hier betroffenen Art verbunden. Hierbei handelt es sich um die eingangs bereits geschilderte Schwierigkeit, daß die Carbonsäureester prinzipiell hydrolyseanfällig sind und sich dementsprechend anders verhalten müssen als die bisher eingesetzten reinen Kohlenwasserstofföle.

Invert-Bohrspülschlämme der hier betroffenen Art enthalten üblicherweise zusammen mit der geschlossenen Ölphase die feindisperse wäßrige Phase in Mengen von etwa 5 bis 45 Gew.-% und vorzugsweise in Mengen von etwa 5 bis 25 Gew.-%. Dem Bereich von etwa 10 bis 25 Gew.-% an disperser wäßriger Phase kann besondere Bedeutung zukommen. Diese Vorbedingung aus der Konstitution konventioneller Bohrspülungen gilt auch für die hier betroffenen Invert-Spülungen auf Esterbasis. Es leuchtet ein, daß im kontinuierlichen praktischen Betrieb Störungen des Gleichgewichts im Mehrphasensystem auftreten können, die durch eine partielle Esterverseifung bedingt sind.

Erschwert wird die Situation dadurch, daß Bohrspülungen der hier betroffenen Art in der Praxis stets eine Alkalireserve enthalten. Eine wichtige Bedeutung hat diese Alkalireserve als Korrosionsschutz gegen unerwartete Einbrüche saurer Gase, und zwar insbesondere $CO_2$ und/oder $H_2S$. Die Korrosionsproblematik am Bohrgestänge fordert die sichere Einstellung von pH-Werten wenigstens im schwach alkalischen Bereich, beispielsweise auf pH 8,5 bis 9 und höhere Werte.

In Ölspülungen auf Basis reiner Kohlenwasserstofffraktionen als Ölphase werden in der Praxis im allgemeinen ohne Bedenken stark alkalische und dabei stark hydrophile Zusatzstoffe anorganischer oder organischer Art eingesetzt. Besondere Bedeutung kann dabei den Alkalihydroxiden und hier insbesondere dem Natriumhydroxid einerseits oder stark hydrophilen organischen Basen zukommen, wobei Diethanolamin und/oder Triethanolamin besonders übliche Zusatzmittel zum Abfangen von $H_2S$-Verunreinigungen sind. Neben und/oder anstelle der hier genannten stark hydrophilen anorganischen und organischen Basen kommt dem Kalk (lime) oder auch noch schwächerbasischen Metalloxiden, insbesondere dem Zinkoxid oder vergleichbaren Zinkverbindungen als Alkalireserve beträchtliche Bedeutung zu. Gerade Kalk als billiges Alkalisierungsmittel wird in großem Umfange eingesetzt. Dabei werden unbedenklich vergleichsweise hohe Mengen verwendet, die beispielsweise bei 5 bis 10 lb/bbl (Kalk/Ölspülung) oder auch bei noch höheren Werten liegen.

Der Einsatz von Esterspülungen der hier beschriebenen Art fordert bezüglicher dieser Variablen eine Abkehr von der bisherigen Praxis. Natürlich muß auch hier sichergestellt sein, daß der pH-Wert der Bohrspülung im wenigstens schwach alkalischen Bereich gehalten wird und daß eine hinreichende Menge an Alkalireserve für unerwartete Einbrüche von insbesondere sauren Gasen zur Verfügung steht. Dabei wird jedoch darauf geachtet, daß durch einen solchen Alkaligehalt die Esterhydrolyse nicht in unerwünschter Weise gefördert und/oder beschleunigt wird.

So wird erfindungsgemäß darauf geachtet, in der Ölspülung keine stark hydrophilen Basen anorganischer und/oder organischer Art mitzuverwenden. Insbesondere verzichtet die Erfindung auf die Mitverwendung von Alkalihydroxiden oder stark hydrophilen Aminen von der Art des Diethanolamins und/oder des Triethanolamins. Kalk kann wirkungsvoll als Alkalireserve mitverwendet werden. Es ist dann allerdings zweckmäßig, die maximal einzusetzende Kalkmenge mit etwa 2 lb/bbl zu beschränken, wobei es bevorzugt sein kann, mit Bohrschlammbeladungen an Kalk zu arbeiten, die leicht darunter liegen, beispielsweise also im Bereich von etwa 1 bis 1,8 lb/bbl (Kalk/Bohrspülung) liegen. Neben oder anstelle des Kalks können andere Alkalireserven bekannter Art zum Einsatz kommen. Genannt seien hier insbesondere die weniger basischen Metalloxide von der Art des Zinkoxids sowie andere vergleichbare Zinkverbindungen. Auch bei dem Einsatz solcher Säurefänger wird allerdings darauf geachtet werden, keine zu großen Mengen einzusetzen, um eine unerwünschte vorzeitige Alterung der Bohrspülung - verbunden mit einem Viskositätsanstieg und damit Verschlechterung der rheologischen Eigenschaften - zu verhindern. Durch die hier diskutierte Besonderheit des erfindungsgemäßen Handelns wird das Entstehen unerwünschter Mengen an hoch wirksamen O/W-Emulgatoren verhindert oder wenigstens so eingeschränkt, daß die guten rheologischen Einsatzwerte auch bei der thermischen Alterung im Betrieb für hinreichend lange Zeit aufrechterhalten bleiben. Hier liegt gegenüber den bisher im Bereich theoretischer Überlegungen verbliebenen Empfehlungen des Standes der Technik ein entscheidender Überschuß, der die praktische Auswertung der niedrigen toxischen Eigenschaften hier betroffener Esteröle überhaupt erst möglich macht.

Die erfindungsgemäß definierten, im Temperaturbereich von 0 bis 5 °C fließ- und pumpfähigen Ester auf Basis der olefinisch ungesättigten Monocarbonsäuren mit 16 bis 24 C-Atomen machen in der geschlossenen Ölphase des Bohrschlamms im allgemeinen wenigstens etwa die Hälfte der Ölphase aus. Bevorzugt sind allerdings solche Ölphasen, die Ester bzw. Estergemische der erfindungsgemäßen Art zum stark überwiegenden Anteil enthalten und in einer ganz besonders wichtigen Ausführungsform der Erfindung praktisch aus solchen Esterölen bestehen. Als Mischungskomponenten für die Abmischung mit den erfindungsgemäß definierten Esterölen eignen sich insbesondere ausgewählte andere Esterölfraktionen, die in der parallelen EP-A1-0 374 672 beschrieben sind. Die Erfindung umfaßt Abmischungen auch mit solchen ausgewählten anderen Esterölen.

Für die Rheologie bevorzugter Invert-Bohrspülungen im Sinne der Erfindung gelten die folgenden rheologischen Daten: Plastische Viskosität (PV) im Bereich von etwa 10 bis 60 mPas, bevorzugt von etwa 15 bis 40 mPas, Fließgrenze (Yield Point YP) im Bereich von etwa 5 bis 40 lb/100 ft$^2$, bevorzugt von etwa 10 bis 25 lb/100 ft$^2$ - jeweils bestimmt bei 50 °C. Für die Bestimmung dieser Parameter, für die dabei eingesetzten Meßmethoden sowie für die im übrigen übliche Zusammensetzung der hier beschriebenen Invert-Bohrölspülungen gelten im einzelnen die Angaben des Standes der Technik, die eingangs zitiert wurden und ausführlich beispielsweise beschrieben sind in dem Handbuch "Manual Of Drilling Fluids Technology" der einen Anmelderin BAROID DRILLING FLUIDS, INC., dort insbesondere unter Kapitel "Mud Testing - Tools and Techniques" sowie "Oil Mud Technology", das der interessierten Fachwelt frei zugänglich ist. Zusammenfassend kann hier zum Zwecke der Vervollständigung der Erfindungsoffenbarung das folgende gesagt werden:

Für die Praxis brauchbare Emulgatoren sind Systeme, die zur Ausbildung der geforderten W/O-Emulsionen geeignet sind. In Betracht kommen insbesondere ausgewählte oleophile Fettsäuresalze, beispielsweise solche auf Basis von Amidoaminverbindungen. Beispiele hierfür werden in der bereits zitierten US-PS 4,374,737 und der dort zitierten Literatur beschrieben. Ein besonders geeigneter Emulgatortyp ist das von der Anmelderin BAROID DRILLING FLUIDS, INC. unter dem Handelsnamen "EZ-MUL" vertriebene Produkt.

Emulgatoren der hier betroffenen Art werden im Handel als hochkonzentrierte Wirkstoffaufbereitungen vertrieben und können beispielsweise in Mengen von etwa 2,5 bis 5 Gew.-%, insbesondere in Mengen von etwa 3 bis 4 Gew.-% - jeweils bezogen auf Esterölphase - Verwendung finden.

Als fluid-loss-Additiv und damit insbesondere zur Ausbildung einer dichten Belegung der Bohrwandungen mit einem weitgehend flüssigkeitsundurchlässigen Film wird in der Praxis insbesondere organophiler Lignit eingesetzt. Geeignete Mengen liegen beispielsweise im Bereich von etwa 15 bis 20 lb/bbl oder im Bereich von etwa 5 bis 7 Gew.-% - bezogen auf die Esterölphase.

In Bohrspülungen der hier betroffenen Art ist der üblicherweise eingesetzte Viskositätsbildner ein kationisch modifizierter feinteiliger organophiler Bentonit, der insbesondere in Mengen von etwa 8 bis 10 lb/bbl oder im Bereich von etwa 2 bis 4 Gew.-%, bezogen auf Esterölphase, verwendet werden kann. Das in der einschlägigen Praxis üblicherweise eingesetzte Beschwerungsmittel zur Einstellung des erforderlichen Druckausgleiches ist Baryt, dessen Zusatzmengen den jeweils zu erwartenden Bedingungen der Bohrung angepaßt werden. Es ist beispielsweise möglich, durch Zusatz von Baryt das spezifische Gewicht der Bohrspülung auf Werte im Bereich bis etwa 2,5 und vorzugsweise im Bereich von etwa 1,3 bis 1,6 zu erhöhen.

Die disperse wäßrige Phase wird in Invert-Bohrspülungen der hier betroffenen Art mit löslichen Salzen beladen. Überwiegend kommt hier Calciumchlorid und/oder Kaliumchlorid zum Einsatz, wobei die Sättigung der wäßrigen Phase bei Raumtemperatur mit dem löslichen Salz bevorzugt ist.

Die zuvor erwähnten Emulgatoren bzw. Emulgatorsysteme dienen gegebenenfalls auch dazu, die Ölbenetzbarkeit der anorganischen Beschwerungsmaterialien zu verbessern. Neben den bereits genannten Aminoamiden sind als weitere Beispiele Alkylbenzolsulfonate sowie Imidazolinverbindungen zu nennen. Zusätzliche Angaben zum einschlägigen Stand der Technik finden sich in den folgenden Literaturstellen: GB 2 158 437, EP 229 912 und DE 32 47 123.

Die erfindungsgemäß auf der Mitverwendung von Esterölen der geschilderten Art aufgebauten Bohrspülflüssigkeiten zeichnen sich zusätzlich zu den bereits geschilderten Vorteilen auch durch eine deutlich verbesserte Schmierfähigkeit aus. Wichtig ist das insbesondere dann, wenn bei Bohrungen beispielsweise in größeren Tiefen der Gang des Bohrgestänges und damit auch das Bohrloch Abweichungen von der Senkrechten aufweisen. Das rotierende Bohrgestänge kommt hier leicht mit der Bohrlochwand in Kontakt und gräbt sich im Betrieb in diese ein. Esteröle der erfindungsgemäß als Ölphase eingesetzten Art besitzen eine deutlich bessere Schmierwirkung als die bisher verwendeten Mineralöle. Hier liegt ein weiterer wichtiger Vorteil für das erfindungsgemäße Handeln.

Zur Umrechnung der im hier betroffenen Zusammenhang im fach-technischen Gebrauch üblichen Maßzahlen, die nicht dem metrischen System entsprechen - und in diesem üblichen Sprachgebrauch in der Erfindungsbeschreibung und den nachfolgenden Beispielen benutzt sind - gelten die folgenden Umrechnungsfaktoren:

1 lb = 0,454 kg; 1 bbl = 159 l;

1 lb/bbl = 2,85 kg/m$^3$, insbesondere im Zusammenhang mit Zusatzmenge der Alkalireserve;

1 lb/100 ft$^2$ = 0,4788 Pa, insbesondere im Zusammenhang mit Bestimmung der Fließgrenze (YP) und der Gelstärke.

**Beispiele**

Beispiel 1

Es wird eine Invert-Bohrspülung auf Basis eines undestillierten Isobutyl-Rübölesters als geschlossene Ölphase hergestellt. Dieser Rübölester basiert auf einer Mischung überwiegend ungesättigter geradkettiger Carbonsäuren, die etwa der folgenden Verteilung entsprechen: 60 % Ölsäure, 20 % Linolsäure, 9 bis 10 % Linolensäure, olefinisch ungesättigte $C_{20/22}$-Monocarbonsäuren etwa 4 %, zum Rest gesättigte Monocarbonsäuren überwiegend des Bereichs $C_{16/18}$.

Der eingesetzte Rübölester besitzt weiterhin die folgenden Kenndaten: Dichte (20 °C) 0,872 g/cm$^3$; Fließpunkt unterhalb - 15 °C; Flammpunkt (DIN 51584) oberhalb 180 °C; Säurezahl (DGF-C-V 2) 1,2; Viskosität bei 0 °C 32 mPas, Viskosität bei 5 °C 24 mPas; kein Gehalt an Aromaten.

Eine Invert-Bohrspülung wird in konventioneller Weise unter Benutzung der folgenden Mischungsbestandteile hergestellt:

230 ml Rübölfettsäureester

26 ml Wasser

6 g organophiler Bentonit (GELTONE der Firma BAROID DRILLING FLUIDS, INC.)

0,2 g Kalk

6 g W/O-Emulgator ("EZ-MUL" der Fa. BAROID DRILLING FLUIDS, INC.)

340 g Baryt

9,2 g CaCl$_2$ x 2 H$_2$O

20 g organophiler Lignit ("DURATONE" der Fa. BAROID DRILLING FLUIDS, INC.)

Zunächst wird durch Viskositätsmessung bei 50 °C am ungealterten Material die Plastische Viskosität (PV), die Fließgrenze (YP) sowie die Gelstärke nach 10 sec. und 10 min. bestimmt.

Anschließend wird die Invert-Bohrspülung 16 h bei 125 °C im Autoklaven im sogenannten "Roller-Oven" gealtert, um den Temperatureinfluß auf die Emulsionsstabilität zu überprüfen. Danach werden erneut die Viskositätswerte bei 50 °C bestimmt.

Es werden die folgenden Werte erhalten:

|  | ungealtertes Material | gealtertes Material |
|---|---|---|
| Plastische Viskosität (PV) | 35 | 62 |
| Fließgrenze (YP) | 21 | 24 |
| Gelstärke (lb/100 ft$^2$) |  |  |
| 10 sec. | 12 | 12 |
| 10 min. | 14 | 15 |

Vergleichsbeispiel 1

Es wird erneut Invert-Bohrspülung gemäß den Angaben des Beispiels 1 zusammengestellt. Jetzt wird jedoch die Kalkmenge auf den Wert von 4 g angehoben und damit drastisch über den Grenzwert von etwa 2 lb/bbl erhöht.

Auch hier werden am ungealterten und am gealterten Material die Viskositätswerte und die Gelstärke bestimmt. Es ergeben sich die folgenden Zahlenwerte:

|  | ungealtertes Material | gealtertes Material |
|---|---|---|
| Plastische Viskosität (PV) | 41 | nicht bestimm-bar |
| Fließgrenze (YP) | 22 | nicht bestimm-bar |
| Gelstärke (lb/100 ft$^2$) | | |
| 10 sec. | 11 | 74 |
| 10 min. | 17 | 72 |

Beispiel 2

Es wird erneut eine Invert-Bohrspülung mit geschlossener Ölphase hergestellt. Als Ölphase wird destillierter Ölsäure-Isobutylester eingesetzt, der die folgenden Kenndaten aufweist: Dichte (20 °C) 0,86 g/cm$^3$; Viskosität (20 °C) 8 bis 10 mPas; Fließpunkt unterhalb - 25 °C; Flammpunkt (DIN 51584) oberhalb 185 °C; Säurezahl (DGF-C-V 2) unterhalb 1; kein Aromatengehalt.

Es wird eine Bohrspülung der folgenden Zusammensetzung formuliert:
210 ml Isobutyloleat
6 g Emulgator auf Fettsäurebasis (INVERMUL der Fa. BAROID DRILLING FLUIDS, INC.)
6 g organophiler Bentonit (GELTONE der Fa. BAROID DRILLING FLUIDS, INC.)
13 g organophiler Lignit (DURATONE der Fa. BAROID DRILLING FLUIDS, INC.)
1 g Kalk
3 g W/O-Emulgator (EZ-MUL der Fa. BAROID DRILLING FLUIDS, INC.)
270 g Baryt
58,2 g gesättigte wäßriger CaCl$_2$-Lösung

Am ungealterten und am gealterten (16 h bei 125 °C im Roller-Oven) Material werden wie in Beispiel 1 die Plastische Viskosität, die Fließgrenze sowie die Gelstärke nach 10 sec. und 10 min. bestimmt. Die dabei gemessenen Werte sind nachfolgend zusammengestellt. In der hier eingesetzten Rezeptur entsprechend etwa 1,2 g Kalk dem Grenzwert von 2 lb/bbl.

|  | ungealtertes Material | gealtertes Material |
|---|---|---|
| Plastische Viskosität (PV) | 46 | 41 |
| Fließgrenze (YP) | 35 | 32 |
| Gelstärke (lb/100 ft$^2$) | | |
| 10 sec. | 17 | 18 |
| 10 min. | 21 | 29 |

Vergleichsbeispiel 2

Mit der Rezeptur des Beispiels 2 wird erneut eine Invert-Bohrölemulsion hergestellt. Jetzt wird jedoch der Kalkzusatz auf 2 g erhöht und damit deutlich der Grenzwert von 2 lb/bbl überschritten. Die am ungealterten und gealterten Material bestimmten Werte für die Plastische Viskosität, die Fließgrenze sowie die Gelstärke sind nachstehend zusammengefaßt:

|  | ungealtertes Material | gealtertes Material |
|---|---|---|
| Plastische Viskosität (PV) | 53 | 46 |
| Fließgrenze (YP) | 61 | 45 |
| Gelstärke (lb/100 ft$^2$) | | |
| 10 sec. | 33 | 24 |
| 10 min. | 40 | 29 |

**Patentansprüche**

1. Verwendung ausgewählter, im Temperaturbereich von 0 bis 5 °C fließ- und pumpfähiger Ester aus monofunktionellen Alkoholen mit 2 bis 12 C-Atomen und olefinisch ein- und/oder mehrfach ungesättigten Monocarbonsäuren mit 16 bis 24 C-Atomen als Ölphase oder wenigstens überwiegender Anteil der Ölphase von Invert-Bohrspülschlämmen, die für die umweltschonende off-shore-Erschließung von Erdöl- bzw. Erdgasvorkommen geeignet sind und in einer geschlossenen Ölphase eine disperse wäßrige Phase sowie Emulgatoren, Beschwerungsmittel, fluid-loss-Additive, viskositätsbildner und gewunschtenfalls weitere übliche Zusatzstoffe zusammen mit einer Alkalireserve mit der Maßgabe enthalten, daß auf die Mitverwendung starker hydrophiler Basen wie Alkalihydroxid und/oder Diethanolamin verzichtet wird und ein gegebenenfalls vorliegender Kalkzusatz auf den Höchstbetrag von etwa 2 lb/bbl Ölspülung begrenzt ist.

2. Ausführungsform nach Anspruch 1, dadurch gekennzeichnet, daß Ester verwendet werden, die sich zu mehr als 70 Gew.-%, vorzugsweise zu mehr als 80 Gew.-% und insbesondere zu mehr als 90 Gew.-% von olefinisch ungesättigten Carbonsäuren des Bereichs von $C_{16-24}$ ableiten.

3. Ausführungsform nach Ansprüchen 1 und 2, dadurch gekennzeichnet, daß die im Bohrschlamm eingesetzten Ester Erstarrungswerte (Fließ- und Stockpunkt) unterhalb - 10 °C, vorzugsweise unterhalb - 15 °C und dabei Flammpunkte oberhalb 100 °C, vorzugsweise oberhalb 160 °C aufweisen.

4. Ausführungsform nach Ansprüchen 1 bis 3, dadurch gekennzeichnet, daß die im Bohrschlamm eingesetzten Ester im Temperaturbereich von 0 bis 5 °C eine Brookfield(RVT)-Viskosität von nicht mehr als 55 mPas, vorzugsweise von nicht mehr als 45 mPas aufweisen.

5. Ausführungsform nach Ansprüchen 1 bis 4, dadurch gekennzeichnet, daß die im Ester vorliegenden ungesättigten $C_{16-24}$-Monocarbonsäurereste sich zu nicht mehr als 35 Gew.-% von 2- und mehrfach olefinisch ungesättigten Säuren ableiten und dabei bevorzugt zu wenigstens etwa 60 Gew.-% 1-fach olefinisch ungesättigt sind.

6. Ausführungsform nach Ansprüchen 1 bis 4, dadurch gekennzeichnet, daß sich die im Estergemisch vorliegenden $C_{16-24}$-Monocarbonsäuren zu mehr als 45 Gew.-%, vorzugsweise zu mehr als 55 Gew.-% von 2- und/oder mehrfach olefinisch ungesättigten Säuren ableiten.

7. Ausführungsform nach Ansprüchen 1 bis 6, dadurch gekennzeichnet, daß im Estergemisch vorliegende Reste gesättigter Carbonsäuren im Bereich $C_{16/18}$ nicht mehr als 20 Gew.-% und insbesondere nicht mehr als 10 Gew.-% ausmachen, bevorzugt aber im Bereich niedrigerer C-Zahlen, insbesondere im Bereich $C_{12/14}$, liegen.

8. Ausführungsform nach Ansprüchen 1 bis 7, dadurch gekennzeichnet, daß die im Ester bzw. Estergemisch vorliegenden Carbonsäurereste wenigstens überwiegend geradkettig und dabei bevorzugt pflanzlichen und/oder tierischen Ursprungs sind und sich insbesondere von Triglyceriden pflanzlichen Ursprungs und/oder Fischölen bzw. -fetten ableiten.

9. Ausführungsform nach Ansprüchen 1 bis 8, dadurch gekennzeichnet, daß die Ester in Bohrspülungen zum Einsatz kommen, die im Invert-Bohrspülschlamm zusammen mit der geschlossenen Ölphase auf Esterbasis die fein-disperse wäßrige Phase in Mengen von 5 bis 45 Gew.-%, vorzugsweise von 5 bis 25 Gew.-% enthalten.

10. Ausführungsform nach Ansprüchen 1 bis 9, dadurch gekennzeichnet, daß sich die Alkoholreste der eingesetzten Ester von geradkettigen und/oder verzweigten gesättigten Alkoholen mit vorzugsweise 4 bis 10 C-Atomen ableiten.

11. Mineralölfreie Invert-Bohrspülungen, die für die offshore-Erschließung von Erdöl- bzw. Erdgasvorkommen geeignet sind und in einer geschlossenen Ölphase auf Basis Esteröle eine disperse wäßrige Phase zusammen mit Emulgatoren, Verdickern, Beschwerungsmitteln, fluid-loss-Additiven und gewünschtenfalls weiteren üblichen Zusatzstoffen enthalten, dadurch gekennzeichnet, daß die Ölphase zum wenigstens überwiegenden Anteil aus Estern monofunktioneller Alkohole mit 2 bis 12 C-Atomen und olefinisch 1- und/oder mehrfach ungesättigten Monocarbonsäuren mit 16 bis 24 C-Atomen gebildet ist, daß weiterhin die W/O-Emulsion schwach alkalisch konditioniert ist und bei Kalkzusatz diese Alkalireserve Mengen von etwa 2 lb/bbl (Kalk/Ölspülung) nicht überschreitet, bevorzugt jedoch leicht darunter liegt.

12. Invert-Bohrspülung nach Anspruch 11, dadurch gekennzeichnet, daß in der Ölspülung keine stark hydrophilen Basen wie Alkalihydroxide oder stark hydrophile Amine wie Diethanolamin vorliegen, gegebenenfalls aber neben oder anstelle von Kalk beschränkte Mengen an Metalloxiden von der Art des Zinkoxids als Alkalireserve vorliegen.

13. Bohrspülungen nach Ansprüchen 11 und 12, dadurch gekennzeichnet, daß sie eine Plastische Viskosität (PV) im Bereich von 10 bis 60 mPas und eine Fließgrenze (Yield Point YP) im Bereich von 5 bis 40 lb/100 ft$^2$ - jeweils bestimmt bei 50 °C - aufweisen.

14. Bohrspülungen nach Ansprüchen 11 bis 13, dadurch gekennzeichnet, daß ihr disperser Wasseranteil 5 bis 45 Gew.-%, bevorzugt 10 bis 25 Gew.-% ausmacht und insbesondere Salze von der Art CaCl$_2$ und/oder KCl gelöst enthält.

15. Bohrspülungen nach Ansprüchen 11 bis 14, dadurch gekennzeichnet, daß die Ölphase des Invertschlamms im Temperaturbereich von 0 bis 5 °C eine Brookfield(RVT)-Viskosität unterhalb 50 mPas vorzugsweise nicht über 40 mPas aufweist.

**Claims**

1. The use of selected esters - flowable and pumpable at temperatures in the range from 0 to 5°C - of monofunctional C$_{2-12}$ alcohols and olefinically mono- and/or polyunsaturated C$_{16-24}$ monocarboxylic acids as the oil phase or at least the predominant part of the oil phase of invert drilling muds which are suitable for the ecologically safe offshore development of oil and gas occurrences and which, in a continuous oil phase, contain a disperse aqueous phase and also emulsifiers, weighting agents, fluid loss additives, thickeners and, if desired, other standard additives together with an alkali reserve, with the proviso that strong hydrophilic bases, such as alkali metal hydroxide and/or diethanolamine, are not used and any addition of lime present is limited to a maximum of about 2 lb/bbl oil mud.

2. The use claimed in claim 1, characterized in that esters of which more than 70% by weight, preferably more than 80% by weight and, more preferably, more than 90% by weight are derived from olefinically unsaturated C$_{16-24}$ carboxylic acids are used.

3. The use claimed in claims 1 and 2, characterized in that the esters used in the drilling mud have solidification points (pour point and setting point) below -10°C, preferably below -15°C, and flash points above 100°C and preferably above 160°C.

4. The use claimed in claims 1 to 3, characterized in that the esters used in the drilling mud have a Broookfield (RVT) viscosity at 0 to 5°C of no more than 55 mPa.s and preferably of no more than 45 mPa.s.

5. The use claimed in claims 1 to 4, characterized in that no more than 35% by weight of the unsaturated C$_{16-24}$) monocarboxylic acids present in the ester are derived from di- and polyolefinically unsaturated acids and at least about 60% by weight are preferably monoolefinically unsaturated.

6. The use claimed in claims 1 to 4, characterized in that more than 45% by weight and preferably more than 55% by weight of the C$_{16-24}$ monocarboxylic acids present in the ester mixture are derived from di- and/or polyolefinically unsaturated acids.

7. The use claimed in claims 1 to 6, characterized in that residues of saturated C$_{16-18}$ carboxylic acids present in the ester mixture make up no more than 20% by weight and, in particular, no more than 10% by weight, but preferably contain fewer carbon atoms, preferably 12 to 14 carbon atoms.

8. The use claimed in claims 1 to 7, characterized in that the carboxylic acid residues present in the ester or ester mixture are at least predominantly linear and are preferably of vegetable and/or animal origin, being derived in particular from triglycerides of vegetable origin and/or fish oils and fats.

9. The use claimed in claims 1 to 8, characterized in that the esters are used in drilling fluids which, in the invert drilling mud, contain the finely disperse aqueous phase together with the continuous ester-based oil phase in quantities of 5 to 45% by weight and preferably in quantities of 5 to 25% by weight.

10. The use claimed in claims 1 to 9, characterized in that the alcohol radicals of the esters used are derived from straight-chain and/or branched, saturated alcohols preferably containing from 4 to 10 C atoms.

11. Mineral-oil-free invert drilling fluids which are suitable for the offshore development of oil and gas occurrences and which, in a continuous oil phase based on ester oils, contain a disperse aqueous phase together with emulsifiers, thickeners, weighting agents, fluid loss additives and, if desired, other

EP 0 374 671 B1

standard additives, characterized in that the oil phase consists at least predominantly of esters of monofunctional alcohols containing 2 to 12 C atoms and olefinically mono- and/or polyunsaturated monocarboxylic acids containing 16 to 24 C atoms and in that the w/o emulsion is mildly alkalized and, where lime is added as alkali reserve, the quantity added should not exceed about 2 lb/bbl (lime/oil mud) and is preferably slightly smaller.

12. An invert drilling fluid as claimed in claim 11, characterized in that the oil mud does not contain highly hydrophilic bases, such as alkali hydroxides, or highly hydrophilic amines, such as diethanolamine, and in that limited quantities of metal oxides of the zinc oxide type are optionally present as alkali reserve in addition to or instead of lime.

13. Drilling fluids as claimed in claims 11 and 12, characterized in that they have a plastic viscosity (PV) in the range from 10 to 60 mPa.s and a yield point (YP) in the range from 5 to 40 lb/100 ft$^2$, as measured at 50°C.

14. Drilling fluids as claimed in claims 11 to 13, characterized in that their disperse water content is from 5 to 45% by weight and preferably from 10 to 25% by weight and, in particular, contains dissolved salts of the $CaCl_2$ and/or KCl type.

15. Drilling fluids as claimed in claims 11 to 14, characterized in that the oil phase of the invert mud has a Brookfield (RVT) viscosity at 0 to 5°C of below 50 mPa.s and preferably not exceeding 40 mPa.s.

**Revendications**

1. Utilisation d'esters sélectionnés fluides et pompables dans la plage de températures allant de 0 à 5°C, à base d'alcools monofonctionnel ayant de 2 à 12 atomes de carbone et d'acides monocarboxyliques non saturés oléfiniquement une et/ou plusieurs fois, ayant de 16 à 24 atomes de carbone, en tant que phase huileuse ou la fraction au moins prépondérante de la phase huileuse de boues de fluides de forage inverse qui conviennent pour la mise en exploitation off-shore qui ménagent l'environnement, de gisements de pétrole ou de gaz naturel et qui renferment dans une phase huileuse continue, une phase aqueuse dispersée ainsi que des agents émulsionnants, des agents de ballast, des additifs de perte de fluide, des agents de formation de la viscosité et, si désiré, d'autres additifs usuels conjointement à une réserve d'alcali, avec la réserve que l'on renonce à l'utilisation conjointe de bases fortes hydrophiles comme un hydroxyde alcalin et/ou la diéthanolamine et qu'une addition de chaux éventuellement présente, est limitée au montant maximum environ de 2l/bbl de fluide de forage (5,70 Kg m$^3$).

2. Mode d'exécution selon la revendication 1, caractérisé en ce que l'on utilise des esters qui dérivent pour plus de 70 % en poids, de préférence plus de 90 % en poids, d'acides carboxyliques non saturés olifiniquement de la gamme de $C_{18}$ à $C_{24}$.

3. Mode d'exécution selon les revendications 1 et 2, caractérisé en ce que les esters mis en jeu dans la boue de forage possèdent des valeurs de solidification (point d'écoulement et point de solidification) en dessous de -15°C et ainsi des points d'inflammation au-dessus de 100°C, de préférence au-dessus de 160°C.

4. Mode d'exécution selon les revendications 1 à 3, caractérisé en ce que les esters mis en oeuvre dans la boue de forage possèdent dans la plage de températures allant de 0 à 5°C, une viscosité Brookfield (RVT) qui n'est pas supérieure à 55 mPas, de préférence pas plus de 45 mPas.

5. Mode d'exécution selon les revendications 1 à 4, caractérisé en ce que les restes d'acides monocarboxyliques en $C_{16}$ à $C_{24}$ non saturés qui sont présents dans l'ester dérivent pour pas plus de 35 % en poids d'acides non saturés deux ou plusieurs fois oléfiniquement et sont insaturés pour cela de préférence pour au moins environ 60 % en poids une fois oléfiniquement.

6. Mode d'exécution selon les revendications 1 à 4, caractérisé en ce que les acides monocarboxyliques en $C_{16}$ à $C_{24}$ présents dans le mélange d'esters dérivent pour plus de 45 % en poids, de préférence pour plus de 55 % en poids d'acides non saturés deux et/ou plusieurs fois oléfiniquement.

13

**7.** Mode d'exécution selon les revendications 1 à 6 caractérisé en ce que les restes d'acides carboxyliques saturés dans la gamme de $C_{16}$ à $C_{18}$ présents dans le mélange d'esters ne représentent pas plus de 20 % en poids et en particulier pas plus de 10 % en poids et se situent de préférence cependant dans la zone des nombres de carbones inférieurs, en particulier dans la zone de $C_{12}$ à $C_{14}$.

**8.** Mode d'exécution selon les revendications 1 à 7, caractérisé en ce que les restes d'acides carboxyliques qui sont présents dans l'ester ou le mélange d'esters sont principalement à chaîne droite et pour cela de préférence d'origine végétale et/ou animale et dérivent en particulier de triglycérides d'origine végétale et/ou d'huiles ou de graisses de poisson.

**9.** Mode d'exécution selon les revendications 1 à 8, caractérisé en ce que l'on met en utilisation dans les fluides de forage des esters qui contiennent dans la boue de fluide de forage inverse conjointement à la phase huileuse continue à base d'esters, la phase aqueuse finement dispersée en quantités allant de 5 à 45 % en poids, de préférence de 5 à 25 % en poids.

**10.** Mode d'exécution selon les revendications 1 à 9, caractérisé en ce que les restes d'alcool des esters mis en oeuvre dérivent d'alcools saturés à chaîne droite et/ou ramifiée ayant de préférence de 4 à 10 atomes de carbone.

**11.** Fluides de forage inverse, dépourvus d'huile minérale qui conviennent pour la mise en exploitation off-shore de gisements de pétrole ou de gaz naturel et qui contiennent dans une phase huileuse continue à base d'huiles estérifiées une phase huileuse dispersée conjointement à des agents émulsionnants, des agents épaississants, des agents de ballast, des additifs de perte de fluides et si désiré d'autres additifs usuels, caractérisés en ce que la phase aqueuse est formée pour une partie au moins prépondérante d'esters d'alcools monofonctionnels ayant de 2 à 12 atomes de carbone et d'acides monocarboxyliques oléfiniquement mono et/ou plusieurs fois insaturés ayant de 16 à 24 atomes de carbone, qu'en outre l'émulsion W/O est formulée sous forme faiblement alcaline et que par addition de chaux cette réserve d'alcali ne dépasse pas des quantités environ de 2 lb/bbl (fluide huileux), (5,70 Kg $m^3$, de préférence se situe légèrement en dessous.

**12.** Fluide de forage inverse selon la revendication 11, caractérisé en ce que dans le fluide huileux, ni base fortement hydrophile, comme des hydroxydes alcalins, ni amine fortement hydrophile, comme la diéthanolamine, ne sont présents, le cas échéant cependant à côté de ou à la place de la chaux, des quantités limitées d'oxydes métalliques du type de l'oxyde de zinc sont présentés en tant que réserve d'alcali.

**13.** Fluides de forage selon les revendications 11 et 12, caractérisés en ce qu'ils possèdent une viscosité plastique (PV) dans la tranche de 10 à 60 mPas et une limite d'écoulement (Yield Point YP) dans la zone de 5 à 40 lb/100 ft$^2$ (2394 à 19150 Pa/100 ft$^2$) respectivement déterminés à 50°C.

**14.** Fluides de forage selon les revendications 11 à 13, caractérisés en ce que leur fraction aqueuse dispersée représente de 5 à 45 % en poids de préférence de 10 à 25 % en poids et renferme en particulier des sels du type $Cl_2Ca$ et/ou ClK dissouts.

**15.** Fluides de forage selon les revendications 11 à 14, caractérisés en ce que la phase huileuse de la boue inverse possède dans la tranche de températures allant de 0 à 5°C une viscosité Brookfield (RVT) en dessous de 50 mPas, de préférence au-dessus de 40 mPas.